# EUROPEAN PATENT SPECIFICATION

(11) **EP 4 265 505 B1**
(45) Date of publication and mention of the grant of the patent: **03.07.2024**
(21) Application number: 23158441.8
(22) Date of filing: 24.02.2023
(51) Int. Cl.: B62D 25/06, B62D 65/00

(54) **METHOD FOR ENLARGING THE VOLUMETRIC LOAD SPACE OF A VEHICLE CABIN AND RELATIVE VEHICLE**
VERFAHREN ZUR VERGRÖSSERUNG DES VOLUMETRISCHEN LADERAUMS EINER FAHRZEUGKABINE UND ENTSPRECHENDES FAHRZEUG
PROCÉDÉ POUR AGRANDIR L'ESPACE DE CHARGE VOLUMÉTRIQUE D'UNE CABINE DE VÉHICULE ET VÉHICULE ASSOCIÉ

(30) Priority: 22.04.2022 IT 202200008000
(43) Date of publication of application: 25.10.2023
(73) Proprietor: Olmedo Special Vehicles S.p.A., 42021 Bibbiano (Reggio Emilia) (IT)
(72) Inventor: QUINTAVALLI, Luca, 42123 REGGIO EMILIA (IT)
(74) Representative: Paparo, Aldo

(56) References cited:
- DE-A1-102014 018 961
- DE-A1-102018 132 759
- JP-A- 2007 022 273
- US-A- 6 149 218
- US-A1- 2016 101 764

## Description

The present invention relates to a method for enlarging the volumetric load space of a cabin of a vehicle.

A further object of the present invention is a vehicle with an enlarged volumetric load space obtained with the aforesaid method.

In particular, the present invention finds application in the field of fitting out vehicles for the transport of disabled persons.

Light commercial vehicles, also known as vans, are generally preferred for the transport of disabled persons, which include a driver's cabin incorporated in the body of a volume large enough to accommodate a wheelchair.

For it to be possible to transport the wheelchair with the disabled person on board, it is necessary to have an enlarged load volume so that the disabled person is not in close contact with the internal roof of the vehicle and so as to allow the loading of the disabled person, with a suitable loading platform, without discomfort for the disabled person himself.

To try to provide a larger cargo compartment with respect to the basic (or standard) model of the vehicle, some car manufacturers have created a version of the vehicle with the roof raised to allow the fitters to modify the loading platform and install the loading platform without carrying out further adaptation interventions on the vehicle.

The availability of commercial vehicles with a raised roof has therefore allowed the fitters to reduce the adaptation interventions of the vehicle and above all to set up a vehicle with a reduced level of modifications such as not to require a new registration before entering circulation.

As a result of mergers of groups operating in the automotive sector, some commercial vehicles have been eliminated from trade with the result of no longer having the possibility of providing vans with a raised roof.

In this circumstance, the user of the vehicle who also needs disabled transport is forced to either buy vans with much higher load capacities, with obvious increases in costs for the purchase of the vehicle (in addition to the obligation to buy a vehicle with dimensions not at all comparable to those of a standard vehicle) or to buy a standard commercial vehicle and ask the fitter to carry out onerous adaptation work. In the second hypothesis, the adaptation work can include lowering the cargo compartment platform and, due to the compromise of part of the original frame of the vehicle, the need to register the vehicle again.

Alternatively, the adaptation work can include raising the roof of the car and also in this case, for the new installation of the opening and closing hatch of the cargo compartment, a new registration of the vehicle is required before entering circulation. Such provisions for vehicles are known from JP 2007 022273 A, US 2016/101764 A1, DE 10 2014 018961 A1, DE 10 2018 132759 A1 and US 6 149 218 A.

Therefore, the fitting options described above involve an increase in the purchasing costs of the vehicle even when choosing a standard vehicle.

The technical task of the present invention is to provide a method for enlarging the volumetric load space of the cabin of a vehicle and relative vehicle obtained with the aforesaid method.

In particular, it is an object of the present invention to provide a method for enlarging the volumetric load space of the cabin of a vehicle, and relative vehicle, so as not to render a new registration of the vehicle itself necessary, at the end of the method.

Further, it is an object of the present invention to provide a method for enlarging the volumetric load space of the cabin of a vehicle which returns a vehicle complying with all road safety standards and all safety standards for the transportation of a disabled person in a vehicle.

The technical task set and the objects specified above are substantially attained by a method for enlarging the volumetric load space of the cabin of a vehicle and the relative vehicle obtained with the method comprising the technical features as set out in one or more of the accompanying claims. The dependent claims correspond to possible embodiments of the invention.

Further features and advantages of the present invention will become more apparent from the following indicative and therefore non-limiting description of a method for enlarging the volumetric load space of the cabin of a vehicle. Such a description will be set out below with reference to the appended drawings, which are provided solely for illustrative and therefore non-limiting purposes, in which:
- figure 1 a illustrates a vehicle in perspective view, with some parts removed to better highlight others;
- figure 1b illustrates the vehicle of figure 1a in perspective view from an opposite angle;
- figure 2 illustrates the vehicle of figure 1a and 1b in perspective view in a cutting phase of the roof of the vehicle;
- figure 3 illustrates an exploded view of the vehicle of figures 1a and 1b, with some parts removed, in a transition before the coupling of a covering element;

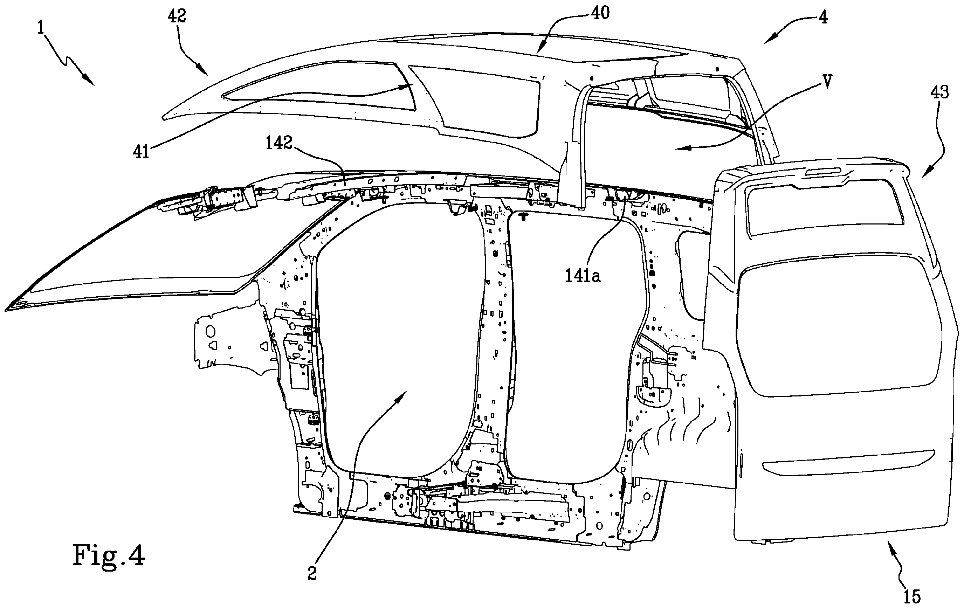

- figure 4 illustrates in exploded view the vehicle of figures 1a and 1b in the transition before the coupling of the covering element;
- figure 5 illustrates in perspective view the vehicle and the covering element coupled and in an open configuration;
- figure 6 illustrates in perspective view the vehicle and the covering element coupled, with some parts removed, in an open configuration;

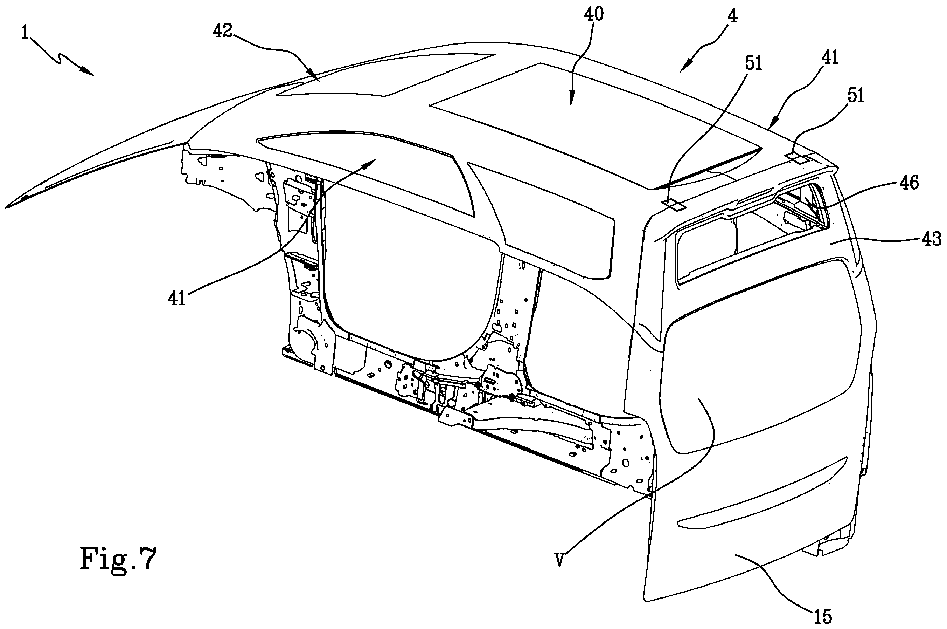

- figure 7 illustrates in perspective view the vehicle and the covering element coupled in a closed configuration.

A vehicle with an enlarged volumetric load space V obtained by means of the method object of the present invention has been globally indicated with 1.

The vehicle 1 is in the sector defined light commercial vehicle or also van and is produced by several car manufacturers.

Said vehicle 1 includes an interior cabin 2 generally divided into at least three areas: a front driver's cabin 21, an intermediate passenger cabin 22 and a rear cargo cabin 23.

The front driver's cabin 21 is an area of the cabin 2 within which some seats including the driver's driving seat are located.

The intermediate passenger cabin 22 is an area of the cabin 2 within which other seats are placed parallel to the seats placed in the front driver's cabin 21.

The rear cargo cabin 23 is an area of the cabin 2 defined by a free compartment in which the owner can load material for transport on board the vehicle 1.

Since the present vehicle 1 is preferably used for the transport of disabled people, in turn on board a wheelchair, the rear cargo cabin 23 can also be used for the transport of people.

In some models of vehicle 1, in order to extend the rear cargo cabin 23 as much as possible in length, it is preferred to extend the latter up to the front driver's cabin 21, thus sacrificing the intermediate passenger cabin 22 at the expense of the number of passengers transportable on board.

Outside the vehicle 1, the interior cabin 2 is bounded at the front by a bonnet area 11 for housing the engine, at the sides by a first and a second side wall 12,13, at the bottom by an underbody 16, at the top by a roof 14 and at the rear by a hatch 15.

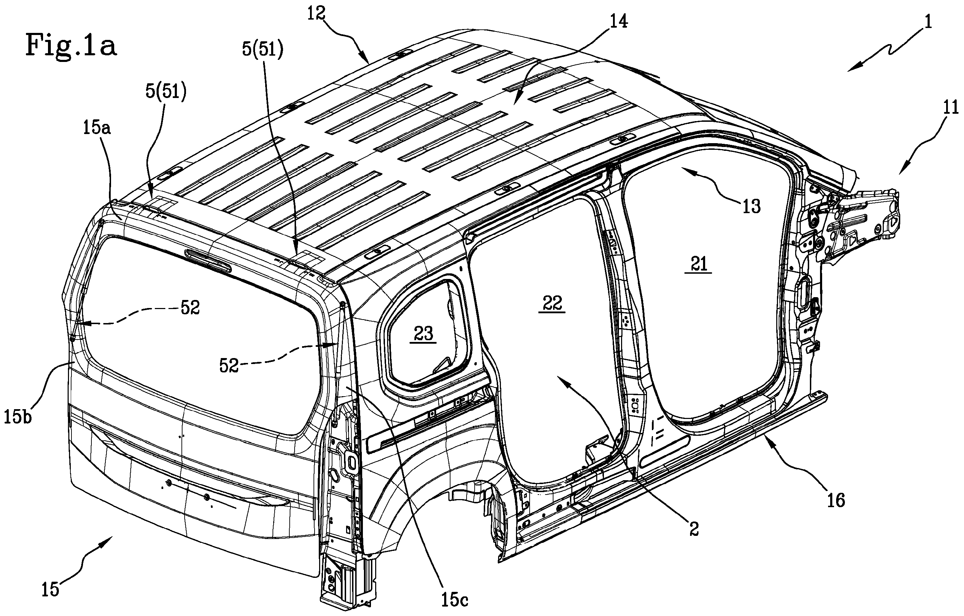

The vehicle 1 has a coupling of the hatch 15 to the roof 14 through a first hinge connection 5, better illustrated in figure 1a, so as to facilitate the opening (or closing) of the hatch 15 with respect to the roof 14 by a rotation of the first with respect to around the second.

More precisely, the hatch 15 includes a first upper side 15a connected via first hinges 51 to the roof 14 of the vehicle 1 and a pair of pistons 52, illustrated with a dotted line in figure 1a, having the liner connected to a respective sidewall 15b, 15c of the hatch and the rod connected to the roof 14. The pair of pistons 52 facilitates the opening and closing of the hatch 15 by a rotation thereof around the first hinges 51.

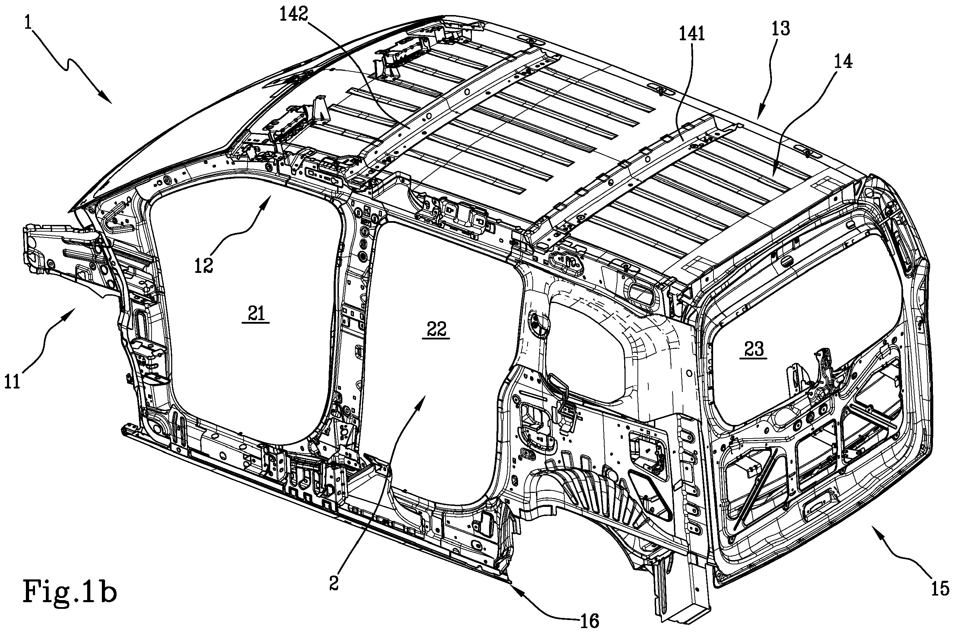

For safety reasons of the vehicle 1, the roof 14 has at least a first and a second reinforcing bar 141 and 142 therein, illustrated in figure 1b.

The first reinforcing bar 141 is preferably placed in an intermediate position between the front driver's cabin 21 and the intermediate passenger cabin 22 and crosses the roof 14 transversely passing from the first to the second side wall 12,14.

The second reinforcing bar 142 is instead placed in the intermediate portion between the intermediate passenger cabin 22 and the rear cargo cabin 23 and crosses the roof 14 transversally passing from the first to the second side wall 12, 14.

The vehicle 1 summarised above represents, in the light commercial vehicle sector, what is produced by several car manufacturers. The rear cargo cabin 23 of the vehicle 1 can be used for transporting a wheelchair, suitably folded on itself, but it is not large enough to accommodate a wheelchair with a disabled person thereon.

The method for enlarging the volumetric load space V of the cabin 2 of a vehicle includes the following steps:
- arranging the vehicle 1;
- cutting the roof 14 of the vehicle 1 in order to obtain an opening 3 on the roof 14;
- providing a covering element 4 having a concave box shape;
- coupling the covering element 4 to the roof 14 by placing the former with the concavity facing the roof 14.

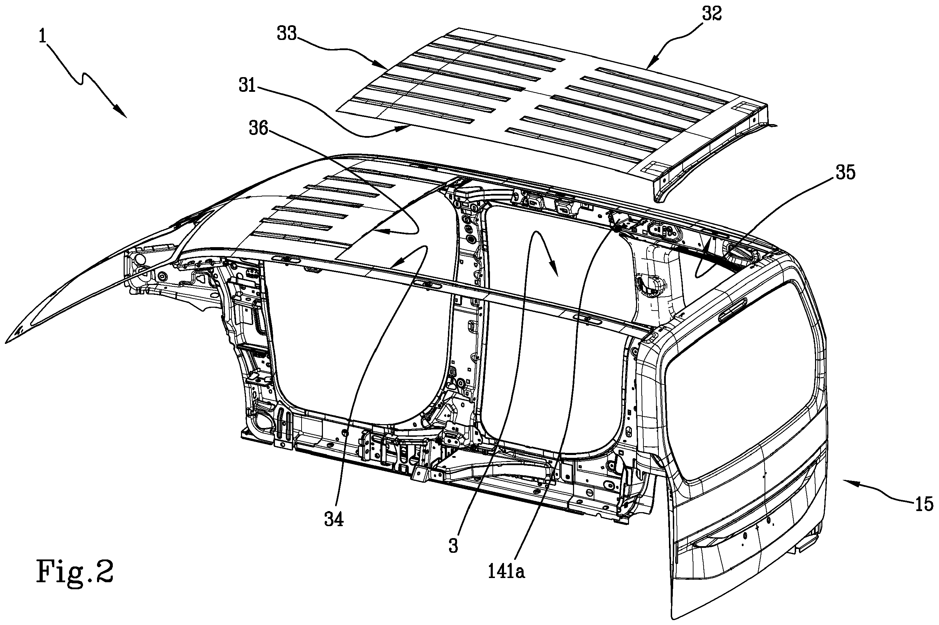

With reference to the cutting phase, the opening 3 is actuated by cutting the roof 14 through a first pair of cutting lines 31, 32, parallel to each other and extending from the rear cargo cabin 23 to the intermediate passenger cabin 22, intersected, at the front driver's cabin 21 by a second cutting line 33 (illustrated in figure 2).

More in particular, the first pair of cutting lines 31 and 32 have an extension in length developing from the hatch 15 to an intermediate portion between the front driver's cabin 21 and the intermediate passenger cabin 22 without reaching, and therefore without cutting, the first reinforcing bar 141. The extension of each cutting line 31 and 32 is such as to cross and then cut the second reinforcing bar 142 dividing the same into a first and a second section 141a and 141b.

In figure 2, only a first section 141a has been illustrated due to representative needs. The second section 141b is substantially placed in a mirrored position and faces the first section 141a.

The second cutting line 33 is instead substantially transverse with respect to the first pair of cutting lines 31 and 32 and made between the front driver's cabin 21 and the intermediate passenger cabin 22.

The intersection between the first pair of cutting lines 31 and 32 and the second cutting line 33 define a removable portion of the roof 14 and at the same time an opening 3 made without affecting the hatch 15.

As a result of the cuts 31,32 and 33, the opening 3 is peripherally bounded by two corresponding edges 34, 35, each parallel and flanked by a respective side wall 12, 13 of the vehicle 1, and frontally by a transverse edge 36 placed in an intermediate position between the front driver's cabin 21 and the intermediate passenger cabin 22.

In the rear position, the edges 34 and 35 opening at the hatch 15 without affecting the same.

The phase of preparing the covering element 4 includes the construction of a concave box-shaped covering element 4. More precisely, the covering element 4 has a top wall 40, substantially quadrangular in shape, from which a pair of side walls 41 develop which are connected to each other at the front with a spoiler wall 42 and at the rear with a rear wall 43. The rear wall 43 is connected to the top wall 40 through a second hinge connection 6.

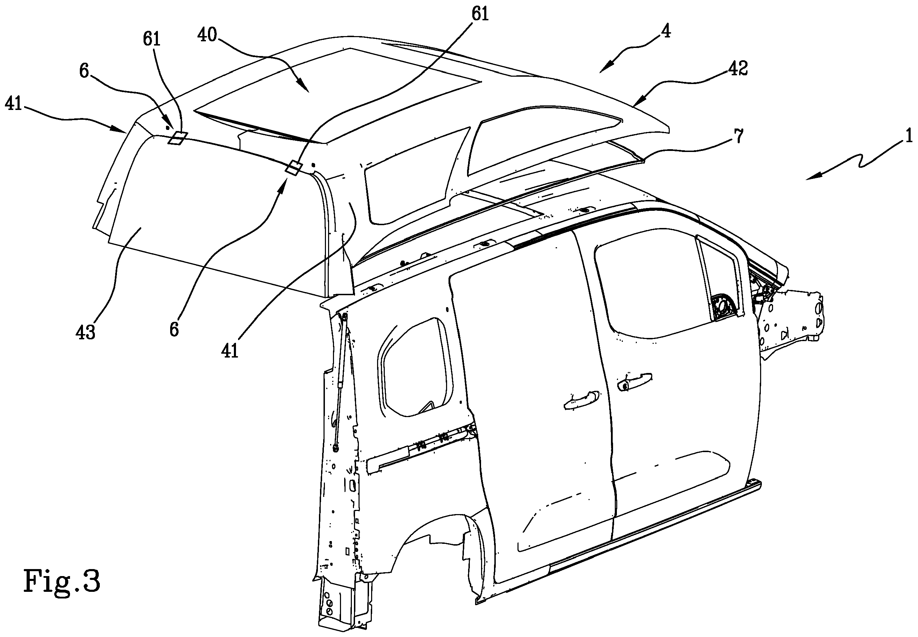

More precisely, the rear wall 43 is connected to the top wall 40 with a second plurality of hinges 61 schematically depicted in figure 3.

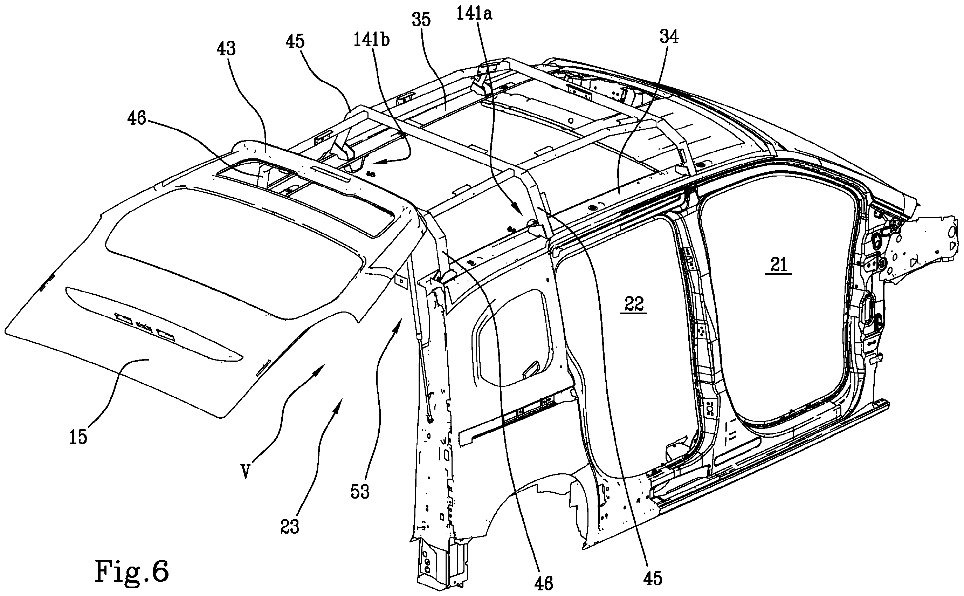

Inside the covering element 4 there is a first pair of uprights 45 and a second pair of uprights 46 (illustrated in figure 6).

The first pair of uprights 45 is placed in an intermediate position, with respect to the development of the covering element 4 between the rear wall 43 and the spoiler wall 42, and includes each upright close to a respective side wall 41.

The second pair of uprights 46 is placed in a position close to the rear wall 43 with each upright also close to a respective side wall 41.

The phase of coupling the covering element 4 to the roof 14 occurs by realising a total closure of the opening 4. In particular, by providing the covering element 4 with the concavity facing the roof 14, a fluid-tight coupling is realised between the two.

To make the coupling between roof 15 and covering 4 fluid-tight, a perimeter seal 7 is included, illustrated in figure 3, enclosed above by the walls 41,42,43 of the cover 3 and below by the edges 34,35,36 of the opening 3. In particular, the coupling phase occurs by resting the first and the second pair of uprights 45,46 at the edges 34,35 present on the opening 3. The aforesaid first pair of uprights 45 is placed and fixed in support of the corresponding first and second portions 141a, 141b of the first reinforcing bar 141.

The second pair of uprights 46 is placed and fixed at the end sections of the edges 34, 35 near the hatch 15.

The coupling of the covering element 4 and the roof 14 includes a further sub-phase of joining the rear wall 43 of the covering element 4 to the hatch 15 so as to make the two elements integral so that when the hatch 15 is opened or closed, the rear wall 43 of the covering element 4 is also opened or closed at the same time.

That is, the rear wall 43 is connected below to the first upper side of the hatch 15a so as to make the rear wall 43 integral with the hatch 15 during the rotation thereof around the first hinges 51.

The lower connection between the rear wall 43 and the hatch 15 can occur by using various connection systems. To cite some examples, it is possible to realise the aforesaid connection through hinges, welding, connecting plates and more.

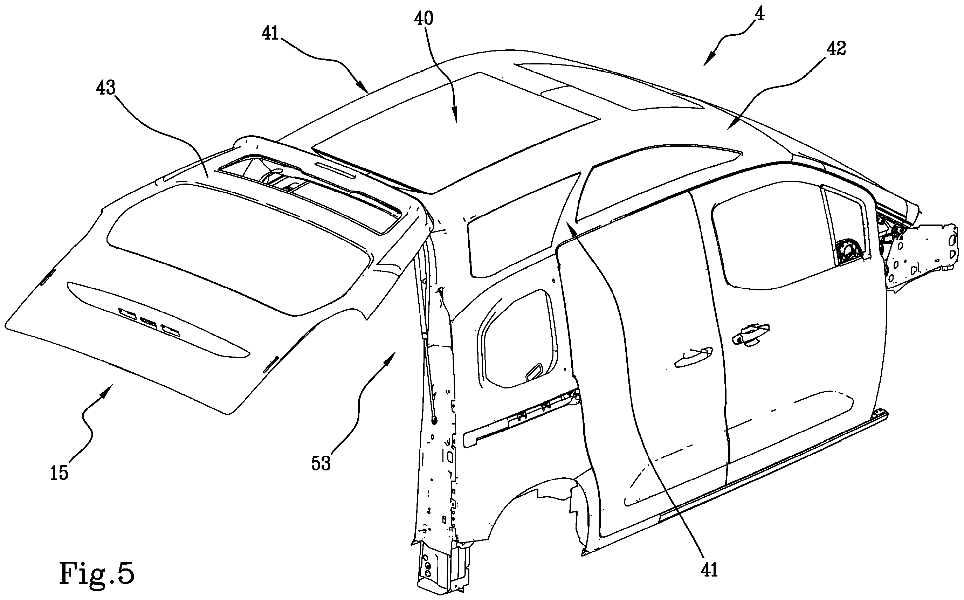

In addition, the rear wall 43 is further connected to the vehicle 1 through a replacement pair of pistons 53 having the active liner (or the rod) active on the rear wall 43 and the rod (or the liner) connected to the vehicle 1. Through the pair of replacement pistons 53 it is possible to actuate the opening or closing, illustrated respectively in figure 5 and 6, of the assembly of the hatch 15 and rear wall 43 to allow the loading and unloading operations of the wheelchair and the disabled person on board the vehicle 1.

The invention achieves important advantages.

Firstly, due to the enlargement of the volumetric load space V of the vehicle 1 it is possible to transport on board, inside the rear cargo cabin 23, a disabled person sitting directly on a wheelchair.

Secondly, the method allows to enlarge the volumetric load space V of normal vehicles 1 present on the market without applying invasive and particularly laborious procedures to the vehicle.

That is, given the low level of modifications of the vehicle 1, it is possible to actuate the method without having to subsequently re-register the vehicle before entering circulation.

The coupling system between the rear wall 43 of the covering element 4 and the hatch 15 further allows a reduced modification of the body without penalising the costs for enlarging the volumetric load space V.

Finally, the optimisation of the cargo space on board the vehicle 1 allows to gain space in height in the cargo cabin 23 without realising interventions which could subtract space below the cargo platform present at the base of the cargo cabin 23. This allows, as a further advantage, the application of a loader platform for wheelchairs with applicable power battery packs below the base of the cargo cabin 23.

## Claims

1. Method for enlarging the volumetric load space (V) of a cabin (2) of a vehicle (1) comprising the following steps:
- arranging a vehicle (1) of the van type with an interior cabin (2) comprising a front driver's cabin (21), an intermediate passenger cabin (22) and a rear cargo cabin (23); said interior cabin (2) being bounded at the front by a bonnet area (11) for housing the engine, at the sides by a first and second side wall (12,13), at the bottom by an underbody (16), at the top by a roof (14) and at the rear by a hatch (15); said hatch (15) being openable and closable by a first hinge connection (5) with the roof (14); said roof (14) having within it a first, a second reinforcing bar (141, 142) and being the first bar (141), crossing the vehicle (1) transversely from a first sidewall (12) to a second side wall (13), located in an intermediate position between the front driver's cabin (21) and the intermediate passenger cabin (22), and being the second bar (142), crossing the vehicle (1) transversely from a first to a second side wall (12,13), placed in an intermediate position between the intermediate passenger cabin (22) and the rear cargo cabin (23);
- cutting the roof (14) of the vehicle (1) in order to obtain on the same an opening (3) obtained by means of a first pair of cutting lines (31,32), parallel to each other and extending from the rear cargo cabin (23) to the intermediate passenger cabin (22), and a second cutting line (33), substantially transversal with respect to the first pair of cutting lines (31,32) and made between the front driver's cabin (21) and the intermediate passenger cabin (22); said opening (3) being made while leaving the hatch (15) intact;
- providing a covering element (4) having a concave box shape and having a top wall (40), substantially quadrangular in shape, from which develop a pair of side walls (41) connected to each other at the front with a spoiler wall (42) and at the rear with a rear wall (43); said rear wall (43) being connected to the top wall (40) by a second hinge connection (6); said covering element (4) being internally provided with a first pair of uprights (45), placed in an intermediate position with each upright respectively close to a side wall (41), and with a second pair of uprights (46), placed in a position close to the rear wall (43) with each upright respectively also close to a side wall (41);
- coupling the covering element (4) to the roof (14) of the vehicle (1) by placing it with the concavity facing the roof (14) of the vehicle (1); this coupling being of the fluid-tight type;
**characterised by** the fact that said coupling phase includes a sub-phase of joining the rear wall (43) of the covering element to the hatch (15) of the vehicle (1), making the two elements integral so that, when the hatch (15) of the vehicle (1) is opened or closed, the rear wall (43) of the covering element (4) is opened or closed at the same time.

2. Method according to claim 1 wherein each first cut line (31,32) has an extension in length developing from the hatch (15) to an intermediate portion between the front driver's cabin (21) without affecting the first reinforcement bar (141); each first line (31,32) favouring the cutting of the second reinforcement bar (142) to allow, together with the second cutting line (33) the removal of a portion of the roof (14) generating the opening (3).

3. Method according to claim 1 wherein each first cut line (31,32) has a distance from a respective sidewall (12,13) so as to define two corresponding edges (34,35) defining two sides of the opening (3).

4. Method according to claim 3 wherein said coupling step comprises coupling the first pair and the second pair of uprights (45,46) at the edges (34,35) present on the opening; said first pair of uprights (45) being placed and fixed in support of the remaining section of the second reinforcement bar (142), said second pair of uprights (46) being placed and fixed at the end sections of the edges (34,35) near the hatch (15);

5. Method according to claim 1 wherein successively said coupling step between roof (14) cover (4) is performed by arranging a perimeter seal (7), enclosed at the top by the walls (41,42,43) of the cover (3) and at the bottom by the edges of the opening (3), so as to achieve a fluid-tight coupling.

6. Vehicle (1) with enlarged volumetric loading space (V) of the cabin (2) of the type comprising:
- an interior cabin (2), having a front driver's cabin (21), an intermediate passenger cabin (22) and a rear cargo cabin (23), bounded at the front by a bonnet area (11), in which the engine is housed, at the side by a first and second side wall (12,13), at the bottom by an underbody (16), at the top by a roof (14) and at the rear by a hatch (15); said closing hatch (15) being opened or closed, to access or delimit the rear cargo cabin (23), through a first hinge connection (5) connected to the roof (14); said roof (14) having inside it a first and a second reinforcing bar (141, 142), the first bar (141) being placed in an intermediate position between the front driver's cabin (21) and the intermediate passenger cabin (22) and transversely crossing the roof (14) passing from the first to the second sidewall (12, 14) and the second bar (142) being located in an intermediate position between the intermediate passenger cabin (22) and the rear cargo cabin (23) and divided into a first bar (141a) and a second bar (141b) located respectively in the vicinity of the first and second sides (12, 13); said roof (14) having in addition an opening (3) defining a pair of parallel edges (34, 35) joined at the front by a transverse edge (36) and terminating at the rear at the hatch (15);
- a roofing element (4) having a concave box shape, coupled to the roof (14) in such a way that the roofing element (4) has a concavity facing the roof (14), having a top wall (40) from which develop a pair of side walls (41) connected to each other at the front by a spoiler wall (42) and at the rear by a rear wall (43); said rear wall (43) being connected to the top wall (40) by a second hinge connection (6);
**characterised by** the fact that said covering element (4) is connected to the roof (14) by a fluid-tight connection and said rear wall (43) of said covering element (4) is integrally connected to the hatch (15) of the vehicle (1) in such a way that, when said hatch (15) is opened or closed, the rear wall (43) of said covering element (4) is simultaneously opened or closed.

7. Vehicle according to claim 6 wherein said cover element 4 further has:
- a first pair of uprights (45) to facilitate the connection and attachment of the roofing element (4) to the roof (14), each upright being positioned in proximity to a respective sidewall (12,13) of the vehicle (1) and fixed at the edges (35,34) in connection with a corresponding section (141a,141b) of the first reinforcement bar;
- a second pair of uprights (46) to facilitate the connection and fixing of the element (4) to the roof (14), each upright being positioned in proximity to a respective side wall (12,13) and in proximity to the hatch (15) and fixed at the edges (35,34).

8. Vehicle according to claim 6 wherein said hatch (15) comprises a first upper side (15a) connected via first hinges (51) to the roof (14) of said vehicle (1) and a pair of pistons (52) having a liner connected to a respective sidewall (15b, 15c) of said hatch and a rod connected to said roof (14); said pair of pistons (52) facilitating the opening and closing of said hatch (15) by rotation thereof around first hinges (51).

9. Vehicle according to claim 8, wherein said rear wall (43) is connected at the top to the top wall (40) by a second plurality of hinges (61) connected to the hatch (15) and at the bottom connected at the first upper side (15a), so as to be integral with the hatch (15) during the rotation of said hatch around the first hinges (51).

10. Vehicle according to claim 6 wherein said coupling between roof (14) and cover occurs with interposition of perimeter seal (7) enclosed at the top by the walls of the cover (41,42,43) and at the bottom by the edges (34,35,36) of the opening (3) so as to realize a fluid-tight coupling between the same.

## Patentansprüche

1. Verfahren zur Vergrößerung des volumetrischen Laderaums (V) einer Kabine (2) eines Fahrzeugs (1), umfassend die folgenden Schritte:
- Anordnen eines Fahrzeugs (1) des Kastenwagen-Typs mit einer Innenkabine (2), die eine vordere Fahrerkabine (21), eine Zwischenfahrgastkabine (22) und eine hintere Frachtkabine (23) umfasst; wobei die Innenkabine (2) vorne durch einen Haubenbereich (11) zur Aufnahme des Motors, seitlich durch eine erste und zweite Seitenwand (12,13), unten durch einen Unterboden (16), oben durch ein Dach (14) und hinten durch eine Klappe (15) begrenzt ist; wobei die Klappe (15) durch eine erste Scharnierverbindung (5) mit dem Dach (14) geöffnet und geschlossen werden kann; wobei das Dach (14) innen einen ersten, einen zweiten Verstärkungsstab (141, 142) aufweist und der erste Stab (141) derjenige ist, der das Fahrzeug (1) quer von einer ersten Seitenwand (12) zu einer zweiten Seitenwand (13) durchquert, die sich in einer Zwischenposition zwischen der vorderen Fahrerkabine (21) und der Zwischenfahrgastkabine (22) befindet, und der zweite Stab (142) derjenige ist, der das Fahrzeug (1) quer von einer ersten zu einer zweiten Seitenwand (12,13) durchquert, die in einer Zwischenposition zwischen der Zwischenfahrgastkabine (22) und der hinteren Frachtkabine (23) platziert ist;
- Schneiden des Dachs (14) des Fahrzeugs (1), um darauf eine Öffnung (3) zu erhalten, die mittels eines ersten Paars von Schnittlinien (31, 32), die parallel zueinander verlaufen und sich von der hinteren Frachtkabine (23) zur Zwischenfahrgastkabine (22) erstrecken, und eine zweite Schnittlinie (33) erhalten wird, die im Wesentlichen quer in Bezug auf das erste Paar von Schnittlinien (31,32) verläuft und zwischen der vorderen Fahrerkabine (21) und der Zwischenfahrgastkabine (22) ausgebildet ist; wobei die Öffnung (3) gefertigt wird, während die Klappe (15) intakt bleibt;
- Bereitstellen eines Abdeckelements (4), das eine konkave Kastenform aufweist und eine obere Wand (40) mit im Wesentlichen viereckiger Form aufweist, aus der sich ein Paar von Seitenwänden (41) entwickeln, die vorne mit einer Spoilerwand (42) und hinten mit einer Rückwand (43) miteinander verbunden sind; wobei die Rückwand (43) durch eine zweite Scharnierverbindung (6) mit der oberen Wand (40) verbunden ist; wobei das Abdeckelement (4) innen mit einem ersten Paar von Ständern (45), die in einer Zwischenposition mit einem jeden Ständer jeweils nahe einer Seitenwand (41) platziert sind, und mit einem zweiten Paar von Ständern (46) versehen ist, die in einer Position nahe der Rückwand (43) mit einem jeden Ständer jeweils auch nahe einer Seitenwand (41) platziert sind;
- Koppeln des Abdeckelements (4) mit dem Dach (14) des Fahrzeugs (1), indem es so platziert wird, dass die Konkavität dem Dach (14) des Fahrzeugs (1) zugewandt ist; wobei diese Kopplung vom fluiddichten Typ ist;
**dadurch gekennzeichnet, dass** der Kopplungsschritt einen Teilschritt zum Zusammenfügen der Rückwand (43) des Abdeckelements mit der Klappe (15) des Fahrzeugs (1) einschließt, indem die beiden Elemente einstückig gemacht werden, so dass, wenn die Klappe (15) des Fahrzeugs (1) geöffnet oder geschlossen wird, die Rückwand (43) des Abdeckelements (4) gleichzeitig geöffnet oder geschlossen wird.

2. Verfahren nach Anspruch 1, wobei eine jede erste Schnittlinie (31, 32) eine Längenerstreckung aufweist, die sich von der Klappe (15) zu einem Zwischenabschnitt zwischen der vorderen Fahrerkabine (21) entwickelt, ohne den ersten Verstärkungsstab (141) zu beeinflussen; wobei eine jede erste Linie (31,32) das Schneiden des zweiten Verstärkungsstabs (142) begünstigt, um zusammen mit der zweiten Schnittlinie (33) das Entfernen eines Abschnitts des Dachs (14), der die Öffnung (3) generiert, zu ermöglichen.

3. Verfahren nach Anspruch 1, wobei eine jede erste Schnittlinie (31,32) einen Abstand von einer jeweiligen Seitenwand (12,13) aufweist, um zwei entsprechende Kanten (34,35) zu definieren, die zwei Seiten der Öffnung (3) definieren.

4. Verfahren nach Anspruch 3, wobei der Kopplungsschritt das Koppeln des ersten Paars und des zweiten Paars von Ständern (45,46) an den Kanten (34,35), die an der Öffnung vorhanden sind, umfasst; wobei das erste Paar von Ständern (45) zur Abstützung des verbleibenden Teilstücks des zweiten Verstärkungsstabs (142) platziert und befestigt wird, wobei das zweite Paar von Ständern (46) an den Endteilstücken der Kanten (34,35) in der Nähe der Klappe (15) platziert und befestigt wird.

5. Verfahren nach Anspruch 1, wobei danach der Kopplungsschritt zwischen dem Dach (14) und der Abdeckung (4) durchgeführt wird, indem eine Umfangsdichtung (7) angeordnet wird, die oben von den Wänden (41,42,43) der Abdeckung (3) und unten von den Kanten der Öffnung (3) umgeben ist, um eine fluiddichte Kopplung zu erzielen.

6. Fahrzeug (1) mit vergrößertem volumetrischem Laderaum (V) der Kabine (2) des Typs, umfassend:
- eine Innenkabine (2), aufweisend eine vordere Fahrerkabine (21), eine Zwischenfahrgastkabine (22) und eine hintere Frachtkabine (23), die vorne durch einen Haubenbereich (11), in dem der Motor aufgenommen ist, seitlich durch eine erste und zweite Seitenwand (12,13), unten durch einen Unterboden (16), oben durch ein Dach (14) und hinten durch eine Klappe (15) begrenzt ist; wobei die Schließklappe (15) geöffnet oder geschlossen wird, um auf die hintere Frachtkabine (23) durch eine erste Scharnierverbindung (5), die mit dem Dach (14) verbunden ist, zuzugreifen oder sie zu begrenzen; wobei das Dach (14) in seinem Inneren einen ersten und einen zweiten Verstärkungsstab (141, 142) aufweist, wobei der erste Stab (141) in einer Zwischenposition zwischen der vorderen Fahrerkabine (21) und der Zwischenfahrgastkabine (22) platziert ist und das Dach (14) quer durchquert, das von der ersten zur zweiten Seitenwand (12, 14) durchläuft, und der zweite Stab (142) in einer Zwischenposition zwischen der Zwischenfahrgastkabine (22) und der hinteren Frachtkabine (23) befindet und in einen ersten Stab (141a) und einen zweiten Stab (141b) unterteilt ist, die sich jeweils in der Nähe der ersten und zweiten Seite (12, 13) befinden; wobei das Dach (14) zusätzlich eine Öffnung (3) aufweist, die ein Paar von parallelen Kanten (34, 35) definiert, die vorne durch eine Querkante (36) zusammengefügt sind und hinten an der Klappe (15) enden;
- ein Dacheindeckungselement (4), das eine konkave Kastenform aufweist, das mit dem Dach (14) gekoppelt ist, sodass das Dacheindeckungselement (4) eine dem Dach (14) zugewandte Konkavität aufweist, die eine obere Wand (40) aufweist, aus der sich ein Paar von Seitenwänden (41) entwickeln, die vorne durch eine Spoilerwand (42) und hinten durch eine Rückwand (43) miteinander verbunden sind; wobei die Rückwand (43) durch eine zweite Scharnierverbindung (6) mit der oberen Wand (40) verbunden ist;
**dadurch gekennzeichnet, dass** das Abdeckelement (4) durch eine fluiddichte Verbindung mit dem Dach (14) verbunden ist und die Rückwand (43) des Abdeckelements (4) einstückig mit der Klappe (15) des Fahrzeugs (1) verbunden ist, so dass, wenn die Klappe (15) geöffnet oder geschlossen wird, die Rückwand (43) des Abdeckelements (4) gleichzeitig geöffnet oder geschlossen wird.

7. Fahrzeug nach Anspruch 6, wobei das Abdeckelement 4 ferner Folgendes aufweist:
- ein erstes Paar von Ständern (45), um die Verbindung und Anbringung des Dacheindeckungselements (4) am Dach (14) zu erleichtern, wobei ein jeder Ständer in der Nähe einer jeweiligen Seitenwand (12,13) des Fahrzeugs (1) positioniert und an den Kanten (35,34) in Verbindung mit einem entsprechenden Teilstück (141a,141b) des ersten Verstärkungsstabs befestigt ist;
- ein zweites Paar von Ständern (46), um die Verbindung und Befestigung des Elements (4) am Dach (14) zu erleichtern, wobei ein jeder Ständer in der Nähe einer jeweiligen Seitenwand (12,13) und in der Nähe der Klappe (15) positioniert und an den Kanten (35,34) befestigt ist.

8. Fahrzeug nach Anspruch 6, wobei die Klappe (15) eine erste Oberseite (15a), die über erste Scharniere (51) mit dem Dach (14) des Fahrzeugs (1) verbunden ist, und ein Paar von Kolben (52) mit einer Auskleidung, die mit einer jeweiligen Seitenwand (15b, 15c) der Klappe verbunden ist, und eine Stange, die mit dem Dach (14) verbunden ist, umfasst; wobei das Paar von Kolben (52) das Öffnen und Schließen der Klappe (15) durch Drehen derselben um erste Scharniere (51) erleichtert.

9. Fahrzeug nach Anspruch 8, wobei die Rückwand (43) oben mit der oberen Wand (40) durch eine zweite Vielzahl von Scharnieren (61) verbunden ist, die mit der Klappe (15) verbunden sind, und unten an der ersten Oberseite (15a) verbunden ist, um während der Drehung der Klappe um die ersten Scharniere (51) einstückig mit der Klappe (15) zu sein.

10. Fahrzeug nach Anspruch 6, wobei die Kopplung zwischen Dach (14) und Abdeckung unter Zwischenlage einer Umfangsdichtung (7) erfolgt, die oben von den Wänden der Abdeckung (41,42,43) und unten von den Kanten (34,35,36) der Öffnung (3) umgeben ist, um eine fluiddichte Kopplung zwischen diesen zu realisieren.

## Revendications

1. Procédé pour agrandir l'espace de charge volumétrique (V) d'une cabine (2) d'un véhicule (1), comprenant les étapes suivantes :
- disposer un véhicule (1) de type fourgon avec une cabine (2) intérieure comprenant une cabine de conducteur avant (21), une cabine de passager intermédiaire (22) et une cabine de chargement arrière (23) ; ladite cabine (2) intérieure étant délimitée à l'avant par une surface de capot (11) pour loger le moteur, en correspondance des côtés par une première et une deuxième paroi latérale (12, 13), en correspondance du fond par un dessous de caisse (16), en correspondance du haut par un toit (14) et à l'arrière par un hayon (15) ; ledit hayon (15) pouvant être ouvert et fermé par un premier raccordement à charnière (5) avec le toit (14) ; ledit toit (14) comportant, en son sein, une première, une deuxième barre de renfort (141, 142) et avec la première barre (141), traversant le véhicule (1) transversalement d'une première paroi latérale (12) à une deuxième paroi latérale (13), située dans une position intermédiaire entre la cabine de conducteur avant (21) et la cabine de passager intermédiaire (22), et avec la deuxième barre (142), traversant le véhicule (1) transversalement d'une première à une deuxième paroi latérale (12, 13), placée dans une position intermédiaire entre la cabine de passager intermédiaire (22) et la cabine de chargement arrière (23) ;
- découper le toit (14) du véhicule (1) afin d'obtenir sur celui-ci une ouverture (3) obtenue au moyen d'une première paire de lignes de coupe (31, 32), parallèles entre elles et se prolongeant de la cabine de chargement arrière (23) à la cabine de passager intermédiaire (22), et d'une deuxième ligne de coupe (33), essentiellement transversale par rapport à la première paire de lignes de coupe (31, 32) et réalisée entre la cabine de conducteur avant (21) et la cabine de passager intermédiaire (22) ; ladite ouverture (3) étant réalisée en laissant le hayon (15) intacte ;
- fournir un élément de recouvrement (4) ayant une forme de boîte concave et comportant une paroi supérieure (40), de forme essentiellement quadrangulaire, à partir de laquelle se développe une paire de parois latérales (41) reliées l'une à l'autre à l'avant par une paroi de becquet (42) et à l'arrière par une paroi arrière (43) ; ladite paroi arrière (43) étant reliée à la paroi supérieure (40) par un deuxième raccordement à charnière (6) ; ledit élément de recouvrement (4) étant pourvu intérieurement d'une première paire de montants (45), placés dans une position intermédiaire avec chaque montant respectivement proche d'une paroi latérale (41), et d'une deuxième paire de montants (46), placés dans une position proche de la paroi arrière (43) avec chaque montant respectivement également proche d'une paroi latérale (41) ;
- coupler l'élément de recouvrement (4) au toit (14) du véhicule (1) en le plaçant avec la concavité tournée vers le toit (14) du véhicule (1) ; ce couplage étant du type étanche ;
**caractérisé en ce que** ladite phase de couplage inclut une sous-phase d'assemblage de la paroi arrière (43) de l'élément de recouvrement au hayon (15) du véhicule (1), rendant les deux éléments solidaires de sorte que, lorsque le hayon (15) du véhicule (1) est ouvert ou fermé, la paroi arrière (43) de l'élément de recouvrement (4) est ouverte ou fermée en même temps.

2. Procédé selon la revendication 1, dans lequel chaque première ligne de coupe (31, 32) comporte une extension en longueur se développant du hayon (15) à une partie intermédiaire entre la cabine de conducteur avant (21) sans affecter la première barre de renfort (141) ; chaque première ligne (31, 32) favorisant la coupe de la deuxième barre de renfort (142) pour permettre, avec la deuxième ligne de coupe (33) l'enlèvement d'une partie du toit (14) générant l'ouverture (3).

3. Procédé selon la revendication 1, dans lequel chaque première ligne de coupe (31, 32) comporte une distance d'une paroi latérale respective (12, 13) de manière à définir deux bords correspondants (34, 35) définissant deux côtés de l'ouverture (3).

4. Procédé selon la revendication 3, dans lequel ladite étape de couplage comprend le couplage de la première paire et de la deuxième paire de montants (45, 46) en correspondance des bords (34, 35) présents sur l'ouverture ; ladite première paire de montants (45) étant placée et fixée en support de la section restante de la deuxième barre de renfort (142), ladite deuxième paire de montants (46) étant placée et fixée aux sections d'extrémité des bords (34, 35) à proximité du hayon (15) .

5. Procédé selon la revendication 1, dans lequel, successivement, ladite étape de couplage entre le toit (14) et le recouvrement (4) est réalisée en disposant un joint périphérique (7), enfermé au sommet par les parois (41, 42, 43) du recouvrement (3) et au fond par les bords de l'ouverture (3), de manière à réaliser un couplage étanche.

6. Véhicule (1) à espace de charge volumétrique agrandi (V) de la cabine (2) du type comprenant :
- une cabine (2) intérieure, comportant une cabine de conducteur avant (21), une cabine de passager intermédiaire (22) et une cabine de chargement arrière (23), délimitée à l'avant par une surface de capot (11), dans laquelle est logé le moteur, en correspondance des côtés par une première et une deuxième paroi latérale (12, 13), en correspondance du fond par un dessous de caisse (16), en correspondance du haut par un toit (14) et à l'arrière par un hayon (15) ; ledit hayon de fermeture (15) étant ouvert ou fermé, pour accéder ou délimiter la cabine de chargement arrière (23), par un premier raccordement à charnière (5) relié au toit (14) ; ledit toit (14) comportant en son sein une première et une deuxième barre de renfort (141, 142), la première barre (141) étant placée dans une position intermédiaire entre la cabine de conducteur avant (21) et la cabine de passager intermédiaire (22) et traversant transversalement le toit (14) en passant de la première à la deuxième paroi latérale (12, 14) et la deuxième barre (142) étant située dans une position intermédiaire entre la cabine de passager intermédiaire (22) et la cabine de chargement arrière (23) et divisée en une première barre (141a) et une deuxième barre (141b) situées respectivement à proximité du premier et du deuxième côté (12, 13) ; ledit toit (14) comportant de plus une ouverture (3) définissant une paire de bords parallèles (34, 35) reliée à l'avant par un bord transversal (36) et se terminant à l'arrière par le hayon (15) ;
- un élément de toit (4) ayant une forme de boîte concave, couplé au toit (14) de telle sorte que l'élément de toit (4) comporte une concavité orientée vers le toit (14), comportant une paroi supérieure (40) à partir de laquelle se développe une paire de parois latérales (41) reliées l'une à l'autre à l'avant par une paroi de becquet (42) et à l'arrière par une paroi arrière (43) ; ladite paroi arrière (43) étant reliée à la paroi supérieure (40) par un deuxième raccordement à charnière (6) ;
**caractérisé en ce que** ledit élément de recouvrement (4) est relié au toit (14) par un raccordement étanche et ladite paroi arrière (43) dudit élément de recouvrement (4) est intégralement reliée au hayon (15) du véhicule (1) de telle sorte que, lorsque ledit hayon (15) est ouvert ou fermé, la paroi arrière (43) dudit élément de recouvrement (4) est simultanément ouverte ou fermée.

7. Véhicule selon la revendication 6, dans lequel l'élément de recouvrement 4 comporte de plus :
- une première paire de montants (45) pour faciliter le raccordement et la fixation de l'élément de toit (4) au toit (14), chaque montant étant positionné à proximité d'une paroi latérale respective (12, 13) du véhicule (1) et fixé en correspondance des bords (35 ,34) en raccordement avec une section correspondante (141 a, 141 b) de la première barre de renfort ;
- une deuxième paire de montants (46) pour faciliter le raccordement et la fixation de l'élément (4) au toit (14), chaque montant étant positionné à proximité d'une paroi latérale respective (12, 13) et à proximité du hayon (15) et fixé en correspondance des bords (35, 34).

8. Véhicule selon la revendication 6, dans lequel ledit hayon (15) comprend un premier côté supérieur (15a) relié par des premières charnières (51) au toit (14) dudit véhicule (1) et une paire de pistons (52) comportant une chemise reliée à une paroi latérale (15b, 15c) respective dudit hayon et une tige reliée audit toit (14) ; ladite paire de pistons (52) facilitant l'ouverture et la fermeture dudit hayon (15) par rotation de celui-ci autour des premières charnières (51).

9. Véhicule selon la revendication 8, dans lequel ladite paroi arrière (43) est reliée en correspondance du haut à la paroi supérieure (40) par une deuxième pluralité de charnières (61) reliée au hayon (15) et en correspondance du fond reliée au premier côté supérieur (15a), de manière à être solidaire du hayon (15) lors de la rotation dudit hayon autour des premières charnières (51).

10. Véhicule selon la revendication 6, dans lequel ledit couplage entre le toit (14) et le recouvrement se produit avec l'interposition d'un joint périphérique (7) enfermé en correspondance du haut par les parois du recouvrement (41, 42, 43) et en correspondance du fond par les bords (34, 35, 36) de l'ouverture (3) de manière à réaliser un couplage étanche entre les deux.
